# EUROPEAN PATENT APPLICATION

(11) **EP 1 780 882 A1**
(43) Date of publication of application: **02.05.2007**
(21) Application number: 05745849.9
(22) Date of filing: 31.05.2005
(51) Int. Cl.: H02M 7/48, H02P 9/04

(54) **POWER SUPPLY**

(30) Priority: 05.07.2004 JP 2004197987
(71) Applicant: HONDA MOTOR CO., Ltd., Tokyo 107-8556 (JP)
(72) Inventor: EGUCHI, Hiroyuki, c/o K. K. Honda Gijutsu Kenk., Wako-shi, Saitama 3510193 (JP); SHIMIZU, Motohiro, c/o K. K. Honda Gijutsu Kenky., Wako-shi, Saitama 3510193 (JP)
(74) Representative: HOFFMANN EITLE
(86) International application number: PCT/JP2005/009954
(87) International publication number: WO 2006/003767

(57) **Abstract**

An output from an electric generator 1 is rectified by a DC converter unit 2. An output from the DC converter unit 2 is regulated in voltage by the DC-DC converter unit 3 and converted into an AC output having a predetermined frequency by the DC-AC converter unit 4. The DC-AC converter unit 4 includes a median converter unit 4-1 to form a median of the DC voltage output from the DC-DC converter unit 3, an inverter 4-2, and a filter 4-3 and outputs a single-phase three-wire output to output lines 5-1 to 5-5.

## Description

### TECHNICAL FIELD

The present invention relates to a power supply apparatus and, more particularly, to a power supply apparatus which can generate a single-phase three-wire output by using an electric generator or the like driven by an engine as a power source.

### BACKGROUND ART

A power generating apparatus, such as a generator driven by an engine, is widely used as a power supply apparatus for various kind of uses such as portable use and emergency one. Such a power supply apparatus can be constituted in a small scale as a characteristic feature. Furthermore, the power supply apparatus is increasingly demanded to make it possible to generate a single-phase three-wire output to cope with various loads.

FIG. 5 is a functional block diagram of a conventional power supply apparatus which can generate a single-phase three-wire output. As shown in FIG. 5, the power supply apparatus includes an electric generator 1 driven by an engine. Output windings 1-1 and 1-1' of two systems are independently winded on stators of the electric generator 1, respectively. Outputs from the output windings 1-1 and 1-1' are rectified by DC converter units 2 and 2' constituted by rectifying circuit, regulated in voltage by DC-DC converter units 3 and 3' constituted by DC-DC converters, and given to a DC-AC converter units 4 and 4'. The DC converter units and the DC-DC converters may be integrated with each other and constituted as a thyristor regulator which also serves as a rectifying circuit. The DC-AC converter units 4 and 4' include inverters, respectively and convert (DC-AC-convert) DC outputs from the DC-DC converter units 3 and 3' to output AC outputs having a predetermined frequency.

Of lines 5-1, 5-2, 5-3, and 5-4, the lines 5-2 and 5-3 on one side are connected to each other as a common line 5-5 on the output side of the DC-AC converter unit 4 and 4'. As single-phase three-wire outputs, an AC voltage of 100 V can be generated between the common line 5-5 and the line 5-1 or the line 5-5 and the line 5-4, and an AC voltage of 200 V can be generated between the line 5-1 and 5-4. The power supply apparatus is disclosed in Patent Document 1.
[Patent Document 1] JP 2000-209872 A

### DISCLOSURE OF THE INVENTION

### PROBLEM TO BE SOLVED BY THE INVENTION

According to the conventional power supply apparatus, a single-phase three-wire outputs can be easily generated by using a mobile or portable small-size electric generator. However, in the power supply apparatus, output windings of two systems are independently arranged, and outputs therefrom are independently DC-converted, DC-DC-converted, DC-AC-converted, and then coupled to each other. For this reason, when one output on one side between the common line and another line, for example, only an AC voltage of 100 V is used, a maximum output which can be generated can be limited to a half of a full output capability of the electric generator.

Since output circuits of two systems extending from the output windings of the electric generator to the DC-AC converter unit are necessary, a large number of circuit parts typically including an inverter increase, an increase in cost and complication of a circuit configuration is inevitable due to the increase in number of parts.

It is an object of the present invention to solve the problem and to make it possible to maximally use the output capability of an electric generator and considerably reduce the number of parts in a power supply apparatus which can generate a single-phase three-wire output.

### MEANS FOR SOLVING THE PROBLEM

In order to solve the above problem, the first aspect of the present invention is that a power supply apparatus comprising an inverter which converters a DC power supply output into an AC power having a predetermined frequency to output the AC power, wherein a DC-DC converter which switches the DC power supply output, regulates the DC power supply output into a predetermined output, and supplies the predetermined output to the inverter is arranged, and, on an output side of the DC-DC converter, a median converting means for forming a median of a DC voltage output from the DC-DC converter is arranged.

As the second aspect of the present invention, the median converting means is constituted by a switching circuit which is switching-driven to form a median which is 1/2 the DC voltage output from the DC-DC converter.

As the third aspect of the present invention, the switching circuit is constituted by a pair of switching elements connected in series with each other, and the pair of switching elements are alternately switching-driven.

Furthermore, as the fourth aspect of the present invention, the DC-DC converter is a step-up DC-DC converter.

### EFFECT OF THE INVENTION

According to the first aspect of the present invention, even though one output on one side between a common line and another line, a maximum output corresponding to the full output capability of the electric generator can be generated. Furthermore, since an output circuit extending from the output winding of the electric generator to the inverter can be constituted as an output circuit of one system, the number of parts can be considerably reduced.

According to the second aspect, since the median which is 1/2 the DC voltage output from the DC-DC converter is formed using the switching operation of the switching circuit, the median can be easily formed.

According to the third aspect, the switching circuit is constituted by one pair of switching element which are connected in series with each other, and the switching elements are alternately switching-driven to form a median which is 1/2 the DC voltage output from the DC-DC converter. For this reason, the median can be easily formed. The pair of switching elements may be alternately switching-driven such that an output average voltage is substantially 1/2, the switching driving can be easily performed without being synchronized with driving of the inverter. As a matter of course, the switching driving may be synchronized with the driving of the inverter.

Furthermore, according to the fourth aspect, in order to generate a single-phase three-wire output from the output side of the inverter, a voltage which must be given to the input side of the inverter can be easily and sufficiently formed by the DC-DC converter. For this reason, the electric generator and the rectifying circuit need not meet a high-voltage specification. In addition, as needed, a high-voltage small-current specification or a low-voltage large-current specification can also be selected.

### BRIEF DESCRIPTION OF THE DRAWINGS

FIG. 1 is a functional block diagram showing a power supply apparatus according to the present invention.
FIG. 2 is a circuit diagram showing a concrete example of a DC-DC converter unit and a DC-AC converter unit.
FIGS. 3A-3E are time charts showing an operation in FIG. 2.
FIG. 4 is a circuit diagram showing an example of a concrete circuit of a power supply apparatus according to the present invention.
FIG. 5 is a functional block diagram of a conventional power supply apparatus.

### DESCRIPTION OF THE REFERENCE NUMERALS

1...Electric generator, 1-1, 1-1'...Output winding, 2-2'...DC converter unit (driving inverter), 2-1 to 2-6, 3-1, 4-1-1, 4-1-2, 4-2-1 to 4-2-4, 6-2-1 to 6-2-4, 6-3-1 to 6-3-4...MOSFET, 3,3' ...DC-DC converter unit, 4,4' ...DC-AC converter unit, 4-1...Median converter unit, 4-2...Inverter, 4-3...Filter, 5-1 to 5-5...Output line, 6...Bidirectional DC-DC converter, 6-1...Transformer, 6-1-1...Low-voltage winding, 6-1-2...High-voltage winding, 6-2...Low-voltage switching unit, 6-3...High-voltage switching unit, 6-4...LC resonance circuit, 7...Battery, C1 to C6...Capacitor, L1 to L4...Coil, D1...Diode

### BEST MODE FOR CARRYING OUT THE INVENTION

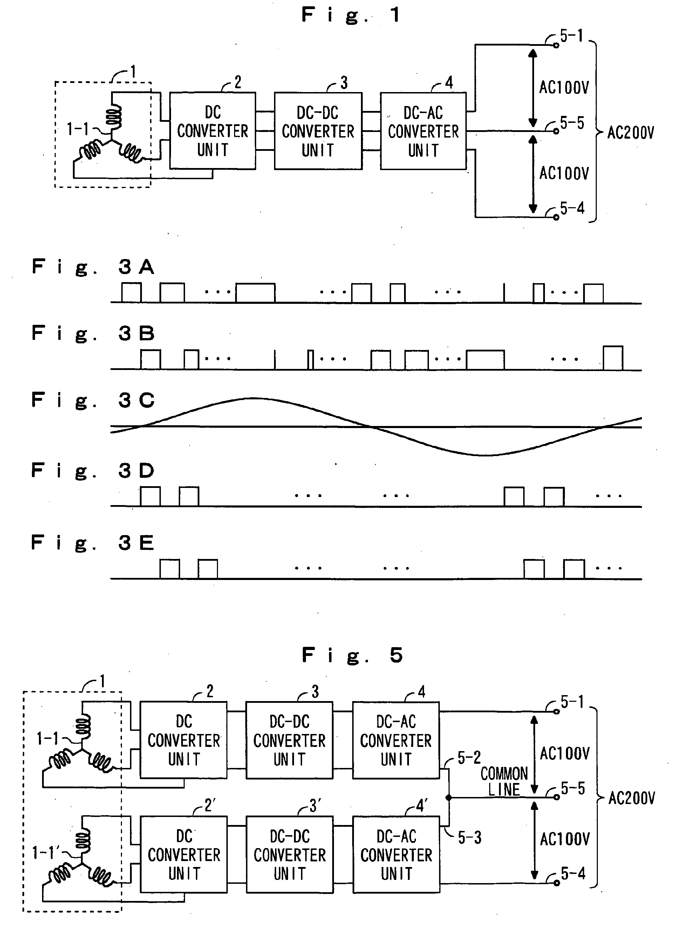

The present invention will be described below in detail with reference to the accompanying drawings. FIG. 1 is a functional block diagram showing a power supply apparatus according to the present invention. The same reference numerals as in FIG. 5 denote the same parts in FIG. 1. In FIG. 1, an electric generator 1 is constituted by, for example, a three-phase multipolar magnetogenerator. The electric generator 1 includes an output winding 1-1 of one system winded on a stator.

A DC converter unit 2 has bridge-connected rectifying elements and functions as a rectifying circuit which rectifies an output from the electric generator 1. A DC-DC converter unit 3 is constituted by a DC-DC converter and regulates an output voltage from the DC converter unit 2 to give the regulated output voltage to a DC-AC converter unit 4 of the next stage.

An input voltage to the DC-AC converter unit 4 must be equal to or higher than a single-phase three-wire output voltage so as to obtain a regulated AC voltage peak value on the output side of the DC-AC converter unit 4. The DC-DC converter unit 3 regulates the output voltage from the DC converter unit 2 to output a voltage required by the input side of the DC-AC converter unit 4. In order to eliminate necessity of causing the electric generator 1 or the DC converter unit 2 to meet a high-voltage specification, as the DC-DC converter constituting the DC-DC converter unit 3, a step-up DC-DC converter is preferably used.

The DC-AC converter unit 4 converts an output from the DC-DC converter unit 3 into an AC power of a predetermined frequency to output the AC power. The DC-AC converter unit 4 is constituted by a median converter unit to form a median of a DC voltage output from the DC-DC converter unit 3, an inverter, and a filter. From the output side of the DC-AC converter unit 4 , a single-phase three-way output, for example, an AC voltage of 100 V can be generated between lines 5-5 and 5-1 and between the line 5-5 and a line 5-4. An AC voltage of 200 V can be generated between the lines 5-1 and 5-4.

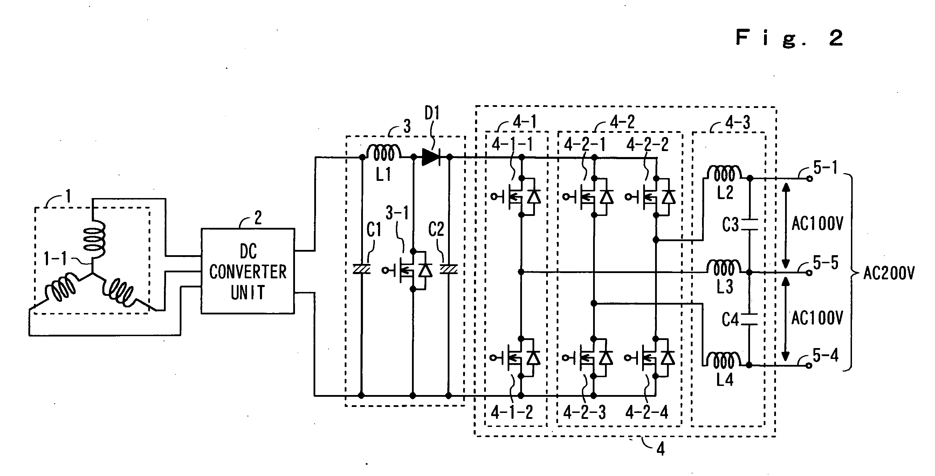

FIG. 2 is a circuit diagram showing a concrete example of the DC-DC converter unit 3 and the DC-AC converter unit 4. The same reference numerals as in FIG. 1 denote the same parts in FIG. 2.

The DC-DC converter unit 3 has capacitors C1 and C2, a choke coil L1, a MOSFET 3-1, and a diode D1. The DC-DC converter unit 3 functions as a step-up DC-DC converter which accumulates energy in the choke coil L1 when the MOSFET 3-1 is turned on and performs a step-up operation by discharging the accumulated energy to the output side when the MOSFET 3-1 is turned off. An ON period of the MOSFET 3-1 is PWM-modulated to regulate a DC voltage serving as an output. When the DC converter unit 2 outputs a DC voltage of, for example, 200 V, the DC-DC converter unit 3 outputs a DC voltage of 320 V as a sufficient input to the DC-AC converter unit 4 required to generate an AC voltage of 200 V between the lines 5-1 and 5-4.

The DC-AC converter unit 4 is constituted by a median converter unit 4-1 to form a median of the DC voltage output from the DC-DC converter unit 3, an inverter 4-2, and a filter 4-3.

The median converter unit 4-1 is constituted by one pair of MOSFETs 4-1-1 and 4-1-2 which are connected in series with each other between output lines of the DC-DC converter unit 3. An output line to form a median is led from a connection point between the MOSFETs. When the MOSFETs 4-1-1 and 4-1-2 are alternately ON-driven at a duty ratio of 1/2, and when a substantially average voltage of the output is made 1/2, a median which is 1/2 the output voltage from the DC-DC converter unit 3 can be formed.

The inverter 4-2 is constituted by bridge-connecting four MOSF-ETs 4-2-1 to 4-2-4. This driving, as is well known, is performed by alternately turning on/off a pair of MOSFETs 4-2-1 and 4-2-4 and a pair of MOSFETs 4-2-2 and 4-2-3.

The filter 4-3 is constituted by capacitors C3 and C4 and coils L1 to L4 and connected to the output sides of the median converter unit 4-1 and the inverter 4-2. The filter 4-3 smoothes outputs from the median converter unit 4-1 and the inverter 4-2 to output a single-phase three-wire output. For example, an AC voltage of 100 V is output between the lines 5-5 and 5-1 and the lines 5-5 and 5-4, and an AC voltage of 200 V is output between the lines 5-1 and 5-4.

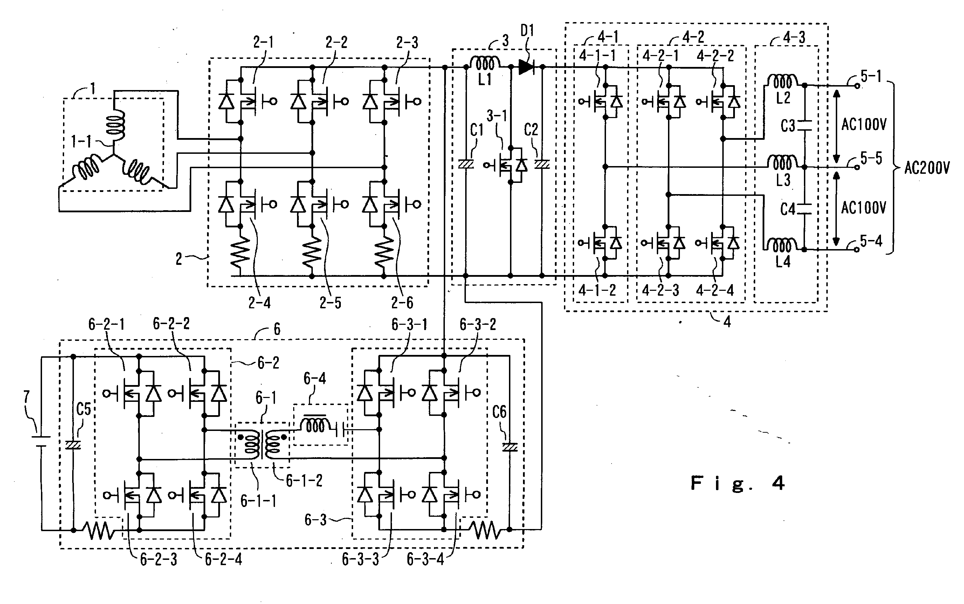

FIG. 3A-3E are time charts showing the above operation. As shown in FIGS. 3A and 3B, when the pair of MOSFETs 4-2-1 and 4-2-4 and the pair of MOSFETs 4-2-2 and 4-2-3 of the inverter 4-2 are alternately turned on/off, and when the ON period is PWM-modulated, an AC voltage of 200 V, as shown in FIG. 3C, can be output between the output lines 5-1 and 5-4.

As shown in FIGS. 3D and 3E, when the MOSFETs 4-1-1 and 4-1-2 of the median converter unit 4-1 are alternately turned on/off at a duty ratio of 1/2, the output line 5-5 can be made a median of an AC voltage of 200 V. Therefore, an AC voltage of 100 V can be output between the output lines 5-5 and 5-1 and the output lines 5-5 and 5-4. The ON/OFF operations of the MOSFETs 4-1-1 and 4-1-2 need not be synchronized with an operation cycle of the inverter 4-2. When the MOSFETs 4-1-1 and 4-1-2 may be driven such that an average voltage of outputs obtained by turning on/off the MOSFETs 4-1-1 and the 4-1-2 is substantially 1/2, a median can be formed on the output line 5-5.

FIG. 4 is a circuit diagram showing an example of a concrete circuit of the power supply apparatus according to the present invention. The same reference numerals as in FIG. 2 denote the same parts in FIG. 4. The three-phase electric generator 1 is an engine driving electric generator which is directly connected to an engine and driven by the engine. In this case, an electric generator which also serves as an electric motor and which can be operated as an engine-starter motor is used.

The electric generator 1 is connected to an engine (not shown). An output side of the electric generator 1 is connected to the DC converter unit 2. The DC converter unit 2 has a bridge-connected rectifying elements to rectify an output from the electric generator 1. Switching elements 2-1 to 2-6 such as MOSFETs are connected to the rectifying elements of the DC converter unit 2 in parallel to each other. These switching elements constitute a driving inverter which is turned on/off to convert a DC voltage into a three-phase AC voltage and apply the AC voltage to the electric generator 1. Rectifying elements of the DC-DC converter unit 3 may be parasitic diodes of switching elements of the MOSFETs or junction diodes which are additionally connected.

An output side of the DC converter unit 2 is connected to the DC-DC converter unit 3. The output side of the DC-DC converter unit 3 is connected to the DC-AC converter unit 4. Since the DC-DC converter unit 3 and the DC-AC converter unit 4 are the same as those in FIG. 2, a description thereof will not be repeated.

A connection point between the DC converter unit 2 and the DC-DC converter unit 3 is connected to the secondary side of a two-way DC-DC converter 6. The primary side of the two-way DC-DC converter 6 is connected to a battery 7 constituted by, for example, a battery (12 V).

The two-wayDC-DC converter 6 performs two-waypower conversion between the battery 7 and the output of the DC converter unit 2 and includes transformer 6-1 having a primary low-voltage-side winding 6-1-1 and a secondary high-voltage-side winding 6-1-2. A step-up ratio of the two-way DC-DC converter 6 is determined by a winding ratio of the low-voltage-side winding 6-1-1 and the high-voltage-side winding 6-1-2.

A low-voltage-side switching unit 6-2 is inserted on the low-voltage-side winding 6-1-1 side, and a high-voltage-side switching unit 6-3 is inserted on the high-voltage-side winding 6-1-2 side. The low-voltage-side switching unit 6-2 is constituted by bridge-connecting, for example, four MOSFETs 6-2-1 to 6-2-4. The high-voltage-side switching unit 6-3 is also constituted by four MOSFETs 6-3-1 to 6-3-4.

Rectifying elements such as diodes are parallel connected to the MOSFETs 6-2-1 to 6-2-4 and 6-3-1 to 6-3-4 of the low-voltage-side switching unit 6-2 and the high-voltage-side switching unit 6-3. These rectifying element may be constituted by parasitic diodes of the MOSFETs or junction diodes which are additionally connected. When the parallel connected rectifying elements are brought together with each other, the low-voltage-side switching unit 6-2 and the high-voltage-side switching unit 6-3 can be considered as switching DC converter units, respectively.

An LC resonance circuit 6-4 is inserted on the high-voltage-side winding 6-1-2 side. The LC resonance circuit 6-4 functions to make a current flowing when at least one the low-voltage-side switching unit 6-2 and the high-voltage-side switching unit 6-3 is driven sinusoidal, to reduce a switching loss, and to prevent the MOSFETs from being broken by a large current. This is because the MOSFET can be turned on/off at an approximate zero-cross point of the sinusoidal current. The LC resonance circuit 6-4 may be arranged on the primary side but the secondary side.

MOSFETs 6-2-1 to 6-2-4 of the low-voltage-side switching unit 6-2 and MOSFETs 6-3-1 to 6-3-4 of the high-voltage-side switching unit 6-3 is switching-control by control circuit (not shown) constituted by CPU and the like. Capacitors C5 and C6 connected on the primary side and the secondary side are output-smoothing capacitors.

An operation in FIG. 4 will be described below. The low-voltage-side switching unit 6-2 and the high-voltage-side switching unit 6-3 of the two-way DC-DC converter 6 are completely synchronously driven, i.e., driven by the same drive signal such that the two-way DC-DC converter 6 automatically performs two-way power conversion. This driving is performed, as is well known, such that the pair of MOSFETs 6-2-1 and 6-2-4 and the pair of MOSFETs 6-2-2 and 6-2-3 are alternately turnedon/off in the low-voltage-side switching unit 6-2, and the pair of MOSFETs 6-3-1 and 6-3-4 and the pair of MOSFETS 6-3-2 and 6-3-3 are alternately turned on/off in the high-voltage-side switching unit 6-3.

At the start of the engine, power conversion is performed from the primary side to the secondary side of the two-way DC-DC converter 6. In this manner, the step-up DC voltage of the battery 7 is given to the driving inverter (DC converter unit) 2. The driving unit 2 converts the DC voltage into a three-phase AC voltage to apply the AC voltage to the electric generator 1, thereby starting the electric generator 1 as an engine-starter electric motor. This starting is performed by PWM-driving the MOSFETs 2-1 to 2-6 of the driving inverter as is well known. At this time, a phase is determined by using a phenomenon that current distribution is changed by a back electromotive voltage depending on the operation of the electric generator (motor) 1, and synchronous driving can be performed without a sensor.

When the engine is started, the electric generator 1 is driven by the engine to generate an output. An output from the electric generator 1 is rectified by the DC converter unit (driving inverter) 2. At this time, the MOSFETs 2-1 to 2-6 constituting the driving inverter are not driven, and the output from the electric generator 1 is full-wave-rectified by the rectifying elements of the DC converter unit 2. An output from the DC converter unit 2 is smoothed and regulated by the DC-DC converter unit 3. The regulation of the DC voltage is performed by, for example, PWM-modulating the MOSFETs. An output from the DC-DC converter unit 3 is converted into an AC output having a predetermined frequency by the DC-AC converter unit 4. The DC-AC converter unit 4, as is explained with reference to FIG. 2, outputs a single-phase three-wire output.

If a remaining capacity of the battery 7 is small, the two-way DC-DC converter 6 performs power conversion from the secondary side to the primary side, and the battery 7 is electrically charged by a step-down output from the DC converter unit 2. In an overloading state, when the output from the electric generator 1 cannot withstand a load, power conversion is performed such that a power is also supplied from the battery 7 through the two-way DC-DC converter 6.

As describedabove, the two-way DC-DC converter 6 automatically exchanges a power between the primary side and the secondary side depending on a relative voltage difference between the voltage on the primary side and the voltage on the secondary side obtained by a winding ratio of the transformer 6-1 to transmit the power between the primary side and the secondary side.

The present invention can be applied to not only a DC power supply constituted by an electric generator and a DC converter unit (rectifying circuit) but also a DC power supply such as a fuel battery.

## Claims

1. A power supply apparatus comprising an inverter which converts a DC power supply output into an AC power having a predetermined frequency to output the AC power,
wherein a DC-DC converter which switches the DC power supply output, regulates the DC power supply output to a predetermined voltage, and supplies the output to the inverter is arranged, and
a median converting means to form a median of the DC voltage output from the DC-DC converter is arranged on the output side of the DC-DC converter.

2. The power supply apparatus according to claim 1,
wherein the median converting means is constituted by a switching circuit which is switching-driven to form a median which is 1/2 the DC voltage output from the DC-DC converter.

3. The power supply apparatus according to claim 2,
wherein the switching circuit is constituted by a pair of switching elements connected in series with each other, and the pair of switching elements are alternately switching-driven.

4. The power supply apparatus according to any of claims 1 to 3,
wherein the DC-DC converter is a step-up DC-DC converter.
